# EUROPEAN PATENT APPLICATION

(11) **EP 2 012 552 A1**
(43) Date of publication of application: **07.01.2009**
(21) Application number: 07739594.5
(22) Date of filing: 26.03.2007
(51) Int. Cl.: H04Q 7/38, H04B 7/26, H04L 1/00

(54) **CHANNEL QUALITY REPORTING METHOD, SCHEDULING METHOD, AND COMMUNICATION SYSTEM, TERMINAL AND BASE STATION**

(30) Priority: 27.04.2006 JP 2006122968; 19.06.2006 JP 2006169342
(71) Applicant: MITSUBISHI ELECTRIC CORPORATION, Chiyoda-ku Tokyo 100-8310 (JP)
(72) Inventor: FUKUI, Noriyuki, Tokyo, 100-8310 (JP)
(74) Representative: Pfenning, Meinig & Partner GbR
(86) International application number: PCT/JP2007/056156
(87) International publication number: WO 2007/125702

(57) **Abstract**

A method of reporting channel quality indication according to the present invention is a method in which each terminal in a communication system monitors quality of a complete system frequency range. When a frequency band of better quality than a frequency band being currently used for data communication and a frequency group including the frequency band of better quality are not detected, each terminal reports channel quality indication of a frequency group formed by a plurality of frequency bands including the frequency band being currently used for data communication. On the other hand, when a frequency band of better quality than a frequency band being currently used for data communication and a frequency group including the frequency band of better quality are detected, each terminal reports channel quality indication of the frequency group that is formed by a plurality of frequency bands including the frequency band of better quality.

## Description

### TECHNICAL FIELD

The present invention relates to a method of reporting channel quality indication (CQI) and a method of scheduling implementable in a communication system that includes at least one base station and a plurality of terminals (including a single terminal) installed in a service area covered by the base station. The present invention particularly relates to a method of reporting channel quality indication and a method of scheduling implementable in a communication system that has a function of monitoring the communication quality and a function of scheduling a plurality of communication channels based on a monitoring result.

### BACKGROUND ART

Currently, the 3GPP has undertaken a study, under the name of LTE (Long Term Evolution), of a wireless network that employs a new wireless technology. In that wireless technology, a plurality of communication channels are defined on a frequency axis and a few communication channels among those communication channels are selected for communication depending on the communication quality (frequency scheduling). Nonpatent Literature 1 mentioned below states that "the channel quality indication (hereinafter, "CQI") is considered as a factor in scheduling".

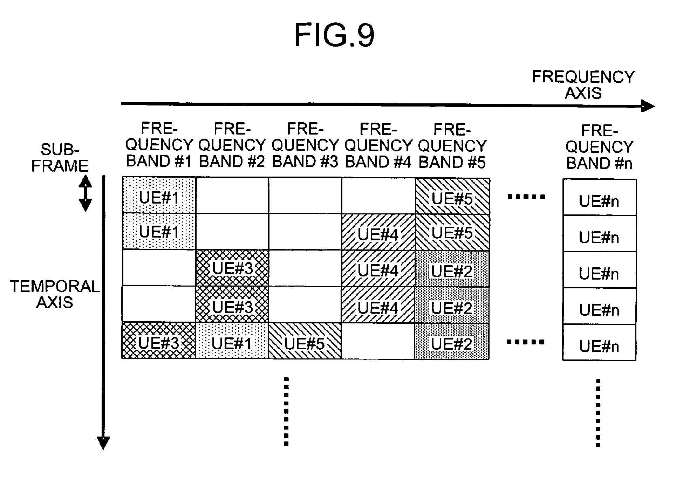

Fig. 9 is a diagram for explaining the abovementioned conventional frequency scheduling. As shown in Fig. 9, the system frequency range is divided in frequency bands #1 to #n and frequency scheduling is performed in each sub-frame along a temporal axis. That is, a base station allocates a suitable frequency band to each terminal (hereinafter, "UE") present in its area at each sub-frame. For example, in the case of a UE #1, a frequency band #1 is allotted thereto at the first two subframes, while a frequency band #2 is allotted thereto at the fifth sub-frame. Such allocation is attributed to the fact that the channel quality of the frequency band #2 became better than the channel quality of the frequency band #1 over a course of time.

Nonpatent Literature 1: 3GPP TR25.814 V1.2.1 Chapter 7.1.2.1

### DISCLOSURE OF INVENTION

### PROBLEM TO BE SOLVED BY THE INVENTION

To perform the abovementioned conventional frequency scheduling, it is necessary to report CQI values to a frequency scheduler. That is, to perform frequency scheduling over a downlink (i.e., from base station to UE), a UE must report the CQI values monitored therein to a base station having a frequency scheduling function. It is possible to improve the throughput of the downlink when all target UEs for frequency scheduling frequently report the CQI values regarding all frequency bands over an uplink.

However, reporting of the CQI values in the abovementioned manner while performing the conventional frequency scheduling may result in congestion of the uplink and a substantial decrease in the throughput thereof. To avoid the decrease in the throughput of the upstream, it is desirable to reduce the number of CQI reports as well as reduce the reporting volume per CQI report.

Thus, to perform the abovementioned conventional frequency scheduling, it becomes necessary to satisfy two conflicting conditions, namely, improving the throughput of the downlink and reducing the reporting volume of the uplink.

For example, following CQI reporting methods are disclosed in Nonpatent Literature "3GPP TR25.814 V1.2.1 Chapter 7.1.3.1.1.1.1".
1. Only feedback information from the top M strongest CQI bands
2. Differential feedback information in time or frequency
3. Bitmap techniques indicating which bands reflect a reported CQI value
4. Hierarchical Tree structure based approaches
5. Using a set of (orthogonal) functions to approximate frequency selective fading profile (e.g. DCT)

In the abovementioned method 2., on the basis of a single CQI of which an absolute value is reported, a difference in the CQI values between temporally or frequency-wise neighboring frequency bands is reported. However, when the variation in quality is frequent (range of quality fluctuation is large), the required number of bits increases even in the case of the method of reporting the difference in CQI values. Thus, such a situation becomes identical to reporting an absolute value of all the CQIs. In the abovementioned methods 3. and 4., because a single CQI value is reported at a time, it takes a long time in updating all the CQI values. In the abovementioned method 5., DCT (Discrete Cosine Transform) is used. However, it is known that the DCT has unstable properties. The abovementioned method 1., in which the information from the top M strongest CQI bands is reported, has a good compatibility with frequency scheduling. However, when the system frequency range is wide, it is necessary to increase the value of M for achieving the scheduling effect, which eventually increases the number of required bits.

The present invention has been made to solve the above problems in the conventional technology and it is an object of the present invention to provide a method of reporting channel quality indication and a method of scheduling that enables reduction in the reporting volume of the uplink while maintaining the throughout of the downlink.

### MEANS FOR SOLVING PROBLEM

To solve the above problems and to achieve the above objects, a method of reporting channel quality indication according to the present invention is implemented in a communication system that includes at least one base station and a plurality of terminals (including a single terminal) installed in a service area covered by the base station, each terminal reporting channel quality indication monitored for a plurality of channels on a frequency axis to the base station that has a scheduling function. The method includes a step of monitoring quality of either one of a complete system frequency range and a partial system frequency range that includes a frequency band being currently used for data communication; and a step of reporting channel quality indication of a frequency group that, when a frequency band of better quality than a frequency band being currently used for data communication and a frequency group including the frequency band of better quality are not detected, is formed by a plurality of frequency bands including the frequency band being currently used for data communication, and on other hand, when a frequency band of better quality than a frequency band being currently used for data communication and a frequency group including the frequency band of better quality are detected, reporting channel quality indication of the frequency group that is formed by a plurality of frequency bands including the frequency band of better quality.

### EFFECT OF THE INVENTION

A method of reporting channel quality indication and a method of scheduling according to the present invention enable reduction in the reporting volume of the uplink while maintaining the throughout of the downlink.

### BRIEF DESCRIPTION OF DRAWINGS

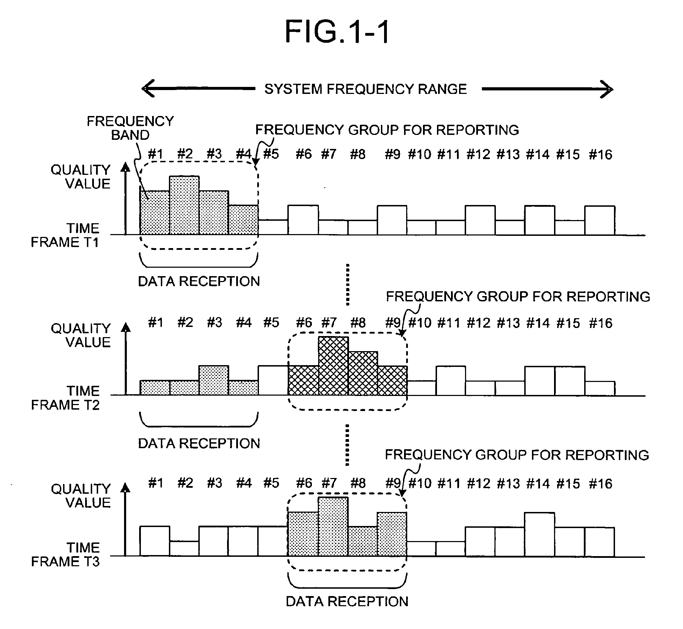

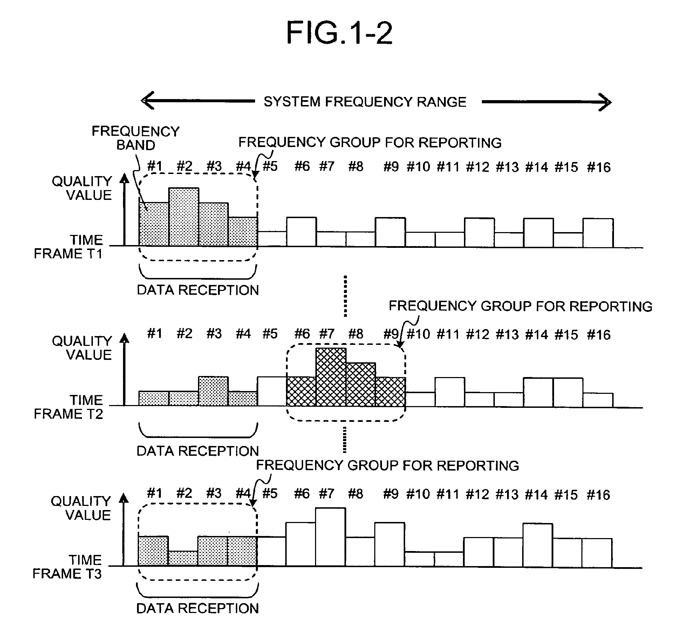

[Fig. 1-1] Fig. 1-1 is a diagram for explaining a method of channel quality indication according to the present invention.
[Fig. 1-2] Fig. 1-2 is a diagram for explaining a method of channel quality indication according to the present invention.
[Fig. 2] Fig. 2 is an exemplary diagram for explaining a case when number of frequency bands for data reception is different than number of frequency bands for CQI reporting.
[Fig. 3] Fig. 3 is an exemplary schematic diagram of a base station and a terminal according to a first embodiment of the present invention.
[Fig. 4] Fig. 4 is a diagram for explaining a process of quality comparison performed by a quality indication organizing unit.
[Fig. 5] Fig. 5 is a diagram of an operational sequence according to a second embodiment of the present invention.
[Fig. 6] Fig. 6 is an exemplary schematic diagram of a base station and a terminal according to a second embodiment of the present invention.
[Fig. 7] Fig. 7 is a diagram for explaining a method of configuring a frequency group.
[Fig. 8] Fig. 8 is a diagram for explaining a method of configuring a frequency group.
[Fig. 9] Fig. 9 is a diagram for explaining conventional frequency scheduling.

### EXPLANATIONS OF LETTERS OR NUMERALS

11 receiving/demodulating unit
12 received signal analyzing unit
13 scheduling unit
14 modulating/transmitting unit
15 data buffering unit
21 receiving/demodulating/monitoring unit
22 quality indication organizing unit
23 ACK/NACK generating unit
24 transmission signal selecting unit
25 modulating/transmitting unit
26 report switching determining unit

### BEST MODE(S) FOR CARRYING OUT THE INVENTION

Exemplary embodiments of a method of reporting channel quality indication, a method of scheduling, a communication system, a terminal, and a base station according to the present invention will be described below in detail with reference to the accompanying drawings. The present invention is not limited to the embodiments described below.

### First embodiment.

Fig. 1-1 is a diagram for explaining an exemplary method of channel quality indication according to the present invention. Each terminal (UE), which along with a base station constitutes a communication system, in a time frame T1, receives data by using frequency bands #1, #2, #3, and #4, and performs CQI reporting in a frequency group formed by the frequency bands #1, #2, #3, and #4. Similarly, in a time frame T2, each terminal (UE) receives data by using the frequency bands #1, #2, #3, and #4, and performs CQI reporting in a different frequency group that is detected to include a frequency band having better channel quality (frequency group formed by frequency bands #6, #7, #8, and #9). Subsequently, in a time frame T3, each terminal (UE) receives data by using the frequency bands #6, #7, #8, and #9, and also performs CQI reporting in the frequency group formed by the frequency bands #6, #7, #8, and #9.

Fig. 1-2 is a diagram for explaining another exemplary method of channel quality indication according to the present invention. The method in Fig. 1-2 is identical to that in Fig. 1-1 with regard to the time frames T1 and T2. However, in the time frame T3, because the data is received by using the frequency bands #1, #2, #3, and #4, the CQI reporting is also performed in the frequency bands #1, #2, #3, and #4. In that case, if a frequency band having better channel quality is detected after a certain period of time, then the operation in the time frame T2 is performed as described above.

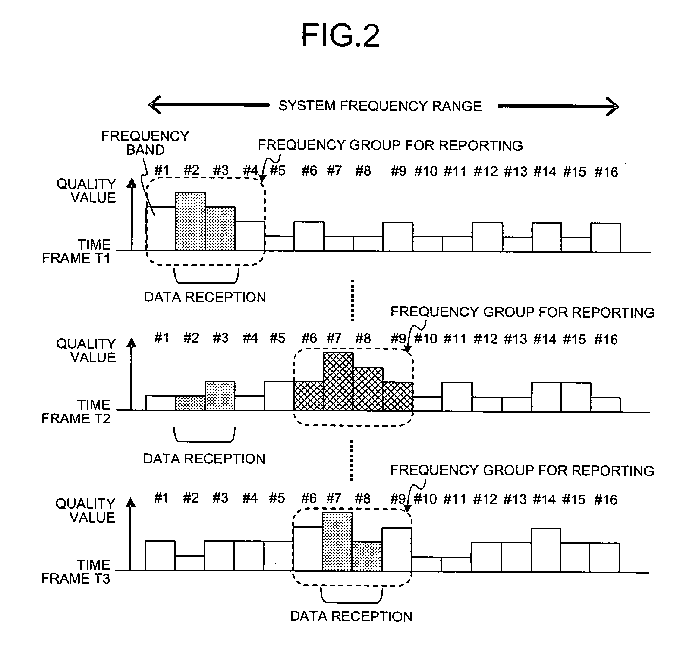

In Figs. 1-1 and 1-2, it is not necessary that the number of frequency bands used for data reception is equal to the number of frequency bands used for CQI reporting. The frequency bands used for CQI reporting, i.e., a CQI reporting group, include the frequency bands used for data reception. Fig. 2 is an exemplary diagram for explaining a case when number of frequency bands for data reception is different than number of frequency bands for CQI reporting. In the example shown in Fig. 2, two frequency bands are used for data reception, while four frequency bands are used for CQI reporting. The number of frequency bands in a CQI reporting group is set as a system setting. When a UE is switched ON and is registered in a wireless system, or when a UE starts communicating, a wireless network including a base station notifies the number of frequency bands in a CQI reporting group to the UE.

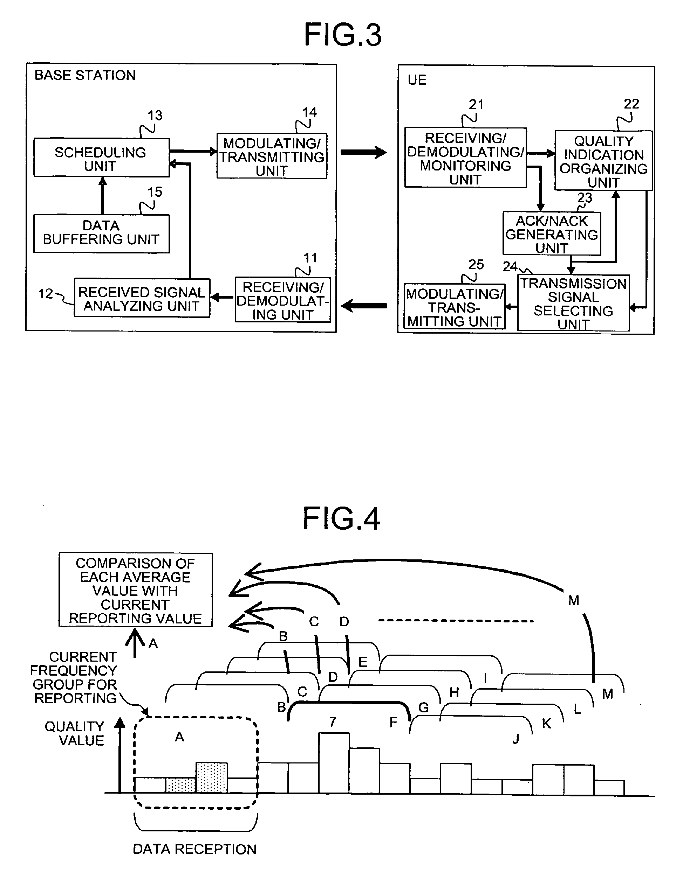

Fig. 3 is an exemplary schematic diagram of a communication system, i.e., a base station and a terminal used in a method of reporting channel quality indication according to the present invention. As shown in Fig. 3, the base station includes a receiving/demodulating unit 11, a received signal analyzing unit 12, a scheduling unit 13, a modulating/transmitting unit 14, and a data buffering unit 15. The terminal (UE) includes a receiving/demodulating/monitoring unit 21, a quality indication organizing unit 22, an ACK/NACK generating unit 23, a transmission signal selecting unit 24, and a modulating/transmitting unit 25.

First, in the UE, the receiving/demodulating/monitoring unit 21 receives a pilot signal, which is to be used for channel quality monitoring, transmitted from the base station. Subsequently, the receiving/demodulating/monitoring unit 21 monitors the channel quality of all the frequency bands (system frequency range) including the frequency bands used for the latest data reception, or some of the frequency bands, to obtain quality indication (e.g., received signal level) and transmits the quality indication to the quality indication organizing unit 22.

The quality indication organizing unit 22 searches for a frequency group including a frequency bands having better channel quality than the frequency group including the frequency bands used for the data reception. Based on the result, the quality indication organizing unit 22 transmits the CQI values of the target frequency bands for reporting to the transmission signal selecting unit 24.

Meanwhile, the receiving/demodulating/monitoring unit 21 can also receive data to be used in the UE. Upon receiving such data, the receiving/demodulating/monitoring unit 21 transmits a decoding result of the data (whether data reception is a success or a failure) to the ACK/NACK generating unit 23, which then generates an ACK or a NACK based on the decoding result.

Subsequently, the transmission signal selecting unit 24 selects a signal for transmission from among the CQI and the ACK/NACK at a predetermined timing. It is possible that both the CQI and the ACK/NACK are selected for transmission. The transmission signal selecting unit 24 then transmits the selected signal to the modulating/transmitting unit 25. The modulating/transmitting unit 25 transmits the CQI, the ACK/NACK, or the CQI and the ACK/NACK towards the base station as a wireless signal.

In the base station, the receiving/demodulating unit 11 sends received signals to the received signal analyzing unit 12. The received signal analyzing unit 12 then separates/distinguishes the CQI, the ACK/NACK, and other signals from the received signals, and transmits the CQI and the ACK/NACK information to the scheduling unit 13.

The scheduling unit 13 selects the frequency bands to be allotted for data transmission based on the CQI, as well as determines a suitable modulation method and allowable redundancy in error correction. Although the scheduling unit 13 generally uses the latest CQI values, past CQI values can be used for the channels not having the latest CQI values. Moreover, based on the result of the ACK/NACK, the scheduling unit 13 determines whether to transmit new data or retransmit the data already transmitted once. Finally, the scheduling unit 13 sends the appropriate data, the selected frequency bands, the modulation method, and the error correcting redundancy to the modulating/transmitting unit 14.

The modulating/transmitting unit 14 generates a wireless signal by performing error correction and modulation, and transmits the wireless signal to the UE. Meanwhile, an appropriate pilot signal is transmitted to the frequency channels to which the wireless signal is transmitted and even other frequency channels. The data buffering unit 15 buffers data transmitted from upper-level layers to each UE.

There can be a plurality of methods by which the quality indication organizing unit 22 can perform an operation (quality comparison). For example, a comparison can be performed between an average CQI value of the frequency group being currently used for CQI reporting and an average CQI value of another frequency group. Fig. 4 is a diagram for explaining that method. In the example shown in Fig. 4, a plurality of groups B to M, each including four frequency bands, are defined by shifting one frequency band at a time in the current frequency group. The frequency bands currently receiving data are frequency bands #2 and #3, while the frequency group being currently used for CQI reporting is a frequency group A. The average CQI value of the frequency group A is compared to the average CQI value of each of the frequency groups B to M. If a frequency group having a higher average CQI value than that of the frequency group A is detected, then that frequency group is determined to be the subject of the subsequent CQI reporting. However, it is not always the case that the frequency groups detected in the abovementioned manner include the frequency band having the maximum CQI value.

Another method of quality comparison that the quality indication organizing unit 22 can perform is, e.g., comparing only those frequency groups that include the frequency band having the maximum CQI value. In the example shown in Fig. 4, comparison can be performed between the frequency groups D, E, F, and G that include the frequency band #7 having the maximum CQI value.

To sum up, as described above, the CQI reporting is usually confined to a limited frequency range including the frequency bands being currently used for the data reception and only when a frequency group having better channel quality is detected, then the CQI value of that frequency group is reported. Thus, the reporting volume of the CQI values can be reduced while transmitting the necessary information (CQI value of the frequency band having better quality as selected by the scheduler). As a result, the throughput is not affected. Moreover, as compared to the conventional method 1., the CQI value of a plurality of frequency bands is reported thereby maintaining a good compatibility with a frequency scheduling method that allots a plurality of frequency bands to a single UE.

In the first embodiment, the quality comparison of the concerned frequency groups is performed at each time frame (e.g., time frames T1, T2, T3, ... in Fig. 1-1) to detect a target frequency group for CQI reporting. However, instead of performing the quality comparison at each time frame, a frequency group can be cyclically allotted at each time frame. More particularly, e.g., to report the CQI value of the frequency groups A to M in Fig. 4, the CQI reporting of the frequency group A can be performed at a reporting time frame T1, the CQI reporting of the frequency group B can be performed at a reporting time frame T2, the CQI reporting of the frequency group C can be performed at a reporting time frame T3, and so on. After the CQI reporting of the frequency group M is performed, the subsequent reporting time frame can be used to perform the CQI reporting of the frequency group A. Subsequently, a frequency group is cyclically allotted at each reporting time frame as described above. In this case, the quality indication organizing unit 22 does not perform the quality comparison, but only cyclically transmits the CQI values of the frequency bands or the frequency groups to the transmission signal selecting unit 24.

Meanwhile, when the target frequency groups for CQI reporting are cyclically allotted, the number of frequency groups at a single reporting time frame need not be confined to one as described above. That is, it is possible to perform the CQI reporting of a plurality of frequency groups at a single reporting time frame.

### Second Embodiment.

Given below is the description of a report switching request that is a distinguishing operation according to a second embodiment of the present invention. Even in the second embodiment a UE performs the quality comparison described with reference to Fig. 4. However, when a frequency group having better channel quality is detected, the UE does not directly report the CQI value of that frequency group, but notifies a scheduler that frequency group by transmitting a report switching request.

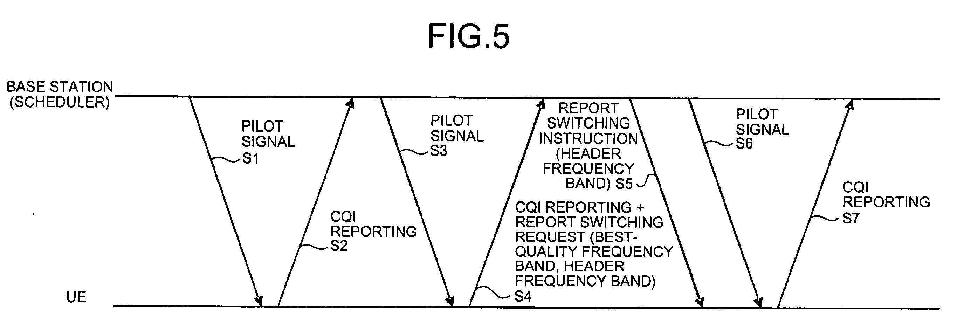

Fig. 5 is a diagram of an operational sequence according to the second embodiment. Upon receiving a pilot signal transmitted from a base station (Step S1), a UE monitors the channel quality of each frequency band and performs the quality comparison described with reference to Fig. 4. If a frequency group having better channel quality is not detected, the UE reports the CQI value of a frequency group that has been previously used and whose channel quality has been already monitored (Step S2).

Subsequently, identical to the above description, upon receiving a pilot signal transmitted from a base station (Step S3), the UE monitors the channel quality of each frequency band and performs the quality comparison described with reference to Fig. 4. If a frequency group (frequency band) having better channel quality is detected, in addition to the abovementioned CQI reporting, the UE also transmits a report switching request for an approval to switch to the frequency group including the frequency band having better channel quality (Step S4). In that case, the UE notifies either one or both of a best-quality frequency band and a header frequency band as the report switching request. In the example shown in Fig. 5, both the best-quality frequency band and the header frequency band are notified. Meanwhile, a best-quality frequency band is frequency band having the largest CQI value in a new frequency group. A header frequency band is the first frequency band (having a low frequency) in a frequency group that includes the best-quality frequency band (determined according to the description with reference to Fig 4). However, instead of the header frequency band, the notification can include any other information that specifies the frequency group.

When a scheduler (equivalent to the scheduling unit 13) of a base station receives a report switching request, it takes into consideration the usage of other UEs and determines whether the report switching request is beneficial to the communication system or the UE that transmitted the report switching request. When the report switching is determined to be beneficial, the scheduler transmits a report switching instruction to switch to a target frequency group (Step S5). The scheduler does not necessarily instruct to switch to a frequency group requested by the UE. That is, the scheduler may instruct a frequency group by shifting one or more frequency bands from the frequency group requested by the UE. In such a case, the scheduler includes the information regarding the corresponding header frequency band in the report switching information.

Subsequently, upon receiving the report switching information, the UE receives a pilot signal (Step S6) and performs CQI reporting for the new frequency group (Step S7). If the report switching information is not received, the UE continues to perform CQI reporting of the frequency group used until that point of time.

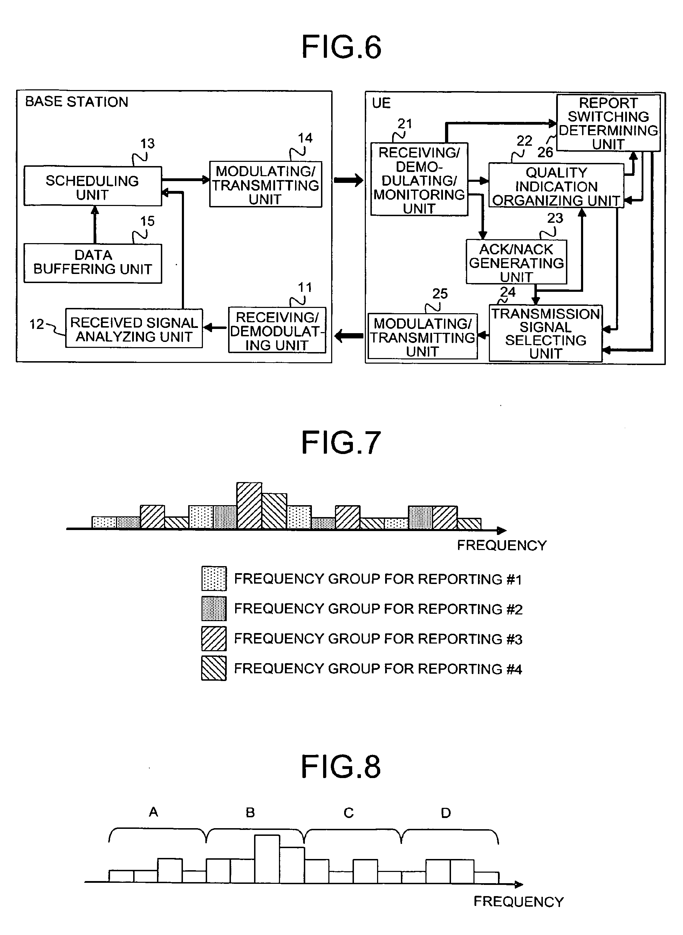

Fig. 6 is an exemplary schematic diagram of a base station and a terminal according to the second embodiment in which the operational sequence of report switching can be implemented. As compared to the configuration in Fig. 3, the UE further includes a report switching determining unit 26. The report switching determining unit 26 obtains information regarding the result of quality comparison from the quality indication organizing unit 22, generates a report switching request signal, and sends the report switching request signal to the transmission signal selecting unit 24. The report switching determining unit 26 receives a report switching information signal from the receiving/demodulating/monitoring unit 21 and instructs the quality indication organizing unit 26 about a target frequency group for CQI reporting. Meanwhile, in the base station, the scheduling unit 13 receives a report switching instruction signal and, when the report switching is determined to be beneficial to the communication system or the UE by performing the operations described with reference to Fig. 5, allows switching to the target frequency group. Subsequently, the modulating/transmitting unit 14 replies with a report switching instruction that instructs switching to the target frequency group.

In this way, in the second embodiment, a scheduler is authorized to determine switching of the CQI reporting. The scheduler takes into consideration the CQI reporting from other UEs and determines whether the report switching request is beneficial to the entire communication system or beneficial to the target UE that transmitted the report switching request and also not adversely affecting the other UEs. When the report switching is determined to be beneficial, the scheduler allows the target UE to switch the frequency group for CQI reporting. Subsequently, the scheduler performs scheduling by using the CQI values of the new frequency group. Thus, it is possible to configure a flexible scheduler algorithm such that, e.g., when a plurality of UEs simultaneously transmit a report switching request for a particular frequency group thereby making it difficult to allow report switching to at least one of the UEs or when it is possible to perform an error-resistant modulation method and an error correcting redundancy even when there is less volume of data to be transmitted through poor line quality to a UE that requests for report switching, then report switching is not allowed. Moreover, by maintaining the current frequency group for CQI reporting, it becomes possible to obtain the latest CQI values for that current frequency group. Furthermore, by using the same frequency group for data retransmission that is used for the initial data transmission, it is possible to reduce the amount of control information transmitted from the based station to a UE.

In the above description according to the first embodiment and the second embodiment, a timing of switching to a frequency band for CQI reporting (as described in the first embodiment) or a timing of transmitting a report switching request (as described in the second embodiment) is determined when a frequency band of better quality is detected during the quality comparison. However, it is also possible to determine the timing only when there is a failure in data reception. Because a failure in data reception means that the quality of a frequency channel used for transmitting the data is poor, it is determined that the a frequency band used for data communication needs to be switched to another frequency band. On the other hand, it the quality is stable, the current frequency channel can be continually used without any extra information thereby efficiently using the wireless line. Meanwhile, a failure in data reception can be said to have occurred even if the data is not properly received only once or if a probability of failure in data reception exceeds a predetermined threshold.

The system can also be configured such that switching of a frequency group or transmitting a report switching request is not performed when a failure in data reception occurs, i.e., when a NACK is transmitted as a reply, but performed only when an ACK is transmitted as a reply. For example, in the case of data retransmission, it is generally said that the control information necessary to demodulate the data (modulation method or error correction redundancy) can be omitted by using the same frequency group for data retransmission that is used for the initial data transmission. In addition, when it is predetermined that the same frequency channel is to be used for the initial data transmission as well as the data retransmission, it becomes possible to further omit the control information. Consequently, when a UE transmits a NACK as a request for data retransmission, the abovementioned operations (switching of a frequency group or transmitting a report switching request) are not performed.

In the above description according to the first embodiment and the second embodiment, a frequency group for CQI reporting is formed by neighboring frequency bands. However, the present invention is not limited to that configuration. That is, it is possible to perform CQI reporting of a frequency group formed by distant frequency bands (see Fig. 7) by predetermining the frequency spacing. In that case, a scheduler allots the frequency channels to a UE by taking into consideration the frequency spacing.

Moreover, in the above description according to the first embodiment and the second embodiment, a frequency group is formed by neighboring frequency bands by shifting one frequency band at a time as shown in Fig. 4. However, it is also possible to configure the system such that, e.g., non-overlapping frequency groups are formed (see Fig. 8).

### INDUSTRIAL APPLICABILITY

A method of reporting channel quality indication and a method of scheduling according to the present invention is suitable in a communication system that includes at least one base station and a plurality of terminals (including a single terminal) installed in a service area covered by the base station, and particularly suitable in a communication system that includes a terminal that monitors the communication quality and a base station that performs scheduling of a plurality of communication channels based on a monitoring result of the terminal.

## Claims

1. A method of reporting channel quality indication implemented in a communication system that includes at least one base station and a plurality of terminals (including a single terminal) installed in a service area covered by the base station, each terminal reporting channel quality indication monitored for a plurality of channels on a frequency axis to the base station that has a scheduling function, the method comprising:
a step of monitoring quality of either one of a complete system frequency range and a partial system frequency range that includes a frequency band being currently used for data communication; and
a step of reporting channel quality indication of a frequency group that, when a frequency band of better quality than a frequency band being currently used for data communication and a frequency group including the frequency band of better quality are not detected, is formed by a plurality of frequency bands including the frequency band being currently used for data communication, and on other hand, when a frequency band of better quality than a frequency band being currently used for data communication and a frequency group including the frequency band of better quality are detected, reporting channel quality indication of the frequency group that is formed by a plurality of frequency bands including the frequency band of better quality.

2. The method according to claim 1, wherein a frequency band of better quality and a frequency group including the frequency band of better quality are detected at the step of reporting by comparing an average value of channel quality of each frequency band in a frequency group being currently used for data communication (average value of channel quality for current data communication) with an average value of channel quality in a different frequency group.

3. The method according to claim 1, wherein a frequency band of a better quality and a frequency group including the frequency band of a better quality are detected at the step of reporting by comparing an average value of channel quality of each frequency band in a frequency group being currently used for data communication (average value of channel quality for current data communication) with an average value of channel quality in a frequency group that includes a frequency band having maximum channel quality obtained as a monitoring result at the step of monitoring.

4. The method according to claim 1, 2, or 3, wherein a frequency group of better quality is reported at a timing when a frequency band of better quality than a frequency band being currently used for data communication is detected and a probability of failure in data reception exceeds a predetermined threshold.

5. The method according to claim 1, 2, or 3, wherein a frequency group of better quality is reported at a timing when a frequency band of better quality than a frequency band being currently used for data communication is detected and data reception is successful.

6. A method of reporting channel quality indication implemented in a communication system that includes at least one base station and a plurality of terminals (including a single terminal) installed in a service area covered by the base station, each terminal reporting channel quality indication monitored for a plurality of channels on a frequency axis to the base station that has a scheduling function, the method comprising:
a step of monitoring quality of a complete system frequency range; and
a step of reporting channel quality indication that includes dividing the complete system frequency range into a plurality of frequency groups and reporting channel quality indication of the frequency groups based on a monitoring result obtained at the step of monitoring.

7. A method of reporting channel quality indication implemented in a communication system that includes at least one base station and a plurality of terminals (including a single terminal) installed in a service area covered by the base station, each terminal reporting channel quality indication monitored for a plurality of channels on a frequency axis to the base station that has a scheduling function, the method comprising:
a step of monitoring quality of a complete system frequency range; and
a step of reporting channel quality indication that includes dividing the complete system frequency range into a plurality of frequency groups and cyclically allocating a frequency group at each reporting timing to report channel quality indication thereof.

8. A method of reporting channel quality indication implemented in a communication system that includes at least one base station and a plurality of terminals (including a single terminal) installed in a service area covered by the base station, each terminal reporting channel quality indication monitored for a plurality of channels on a frequency axis to the base station that has a scheduling function, the method comprising:
a step of monitoring quality of either one of a complete system frequency range and a partial system frequency range that includes a frequency band being currently used for data communication;
a switching requesting step of reporting channel quality indication of a frequency group that, when a frequency band of better quality than a frequency band being currently used for data communication and a frequency group including the frequency band of better quality are not detected, is formed by a plurality of frequency bands including the frequency band being currently used for data communication, and on other hand, when a frequency band of better quality than a frequency band being currently used for data communication and a frequency group including the frequency band of better quality are detected, reporting channel quality indication of the frequency group that is formed by a plurality of frequency bands including the frequency band being currently used for data communication and requesting switching to the frequency group including the frequency band of the better quality; and
a step of reporting channel quality indication of a frequency group that, when the base station instructs switching of a frequency group for reporting, is formed by a plurality of frequency bands including an instructed frequency band.

9. The method according to claim 8, wherein a frequency band of better quality and a frequency group including the frequency band of better quality are detected at the switching requesting step by comparing an average value of channel quality of each frequency band in a frequency group being currently used for data communication (average value of channel quality for current data communication) with an average value of channel quality in a different frequency group.

10. The method according to claim 8, wherein a frequency band of a better quality and a frequency group including the frequency band of a better quality are detected at the switching requesting step by comparing an average value of channel quality of each frequency band in a frequency group being currently used for data communication (average value of channel quality for current data communication) with an average value of channel quality in a frequency group that includes a frequency band having maximum channel quality obtained as a monitoring result at the step of monitoring.

11. The method according to claim 8, wherein either one or both of a frequency band having best channel quality and information that enables identification of a frequency group including the frequency band having best channel quality is notified at the switching requesting step.

12. The method according to any of claims 8 to 11, wherein a request of switching to a target frequency group for reporting is transmitted at a timing when a frequency band of better quality than a frequency band being currently used for data communication is detected and a probability of failure in data reception exceeds a predetermined threshold.

13. The method according to any of claims 8 to 11, wherein a request of switching to a target frequency group for reporting is transmitted at a timing when a frequency band of better quality than a frequency band being currently used for data communication is detected and data reception is successful.

14. A method of scheduling implemented in a communication system that includes at least one base station and a plurality of terminals (including a single terminal) installed in a service area covered by the base station, the base station performing scheduling based on channel quality indication monitored by each terminal, wherein
the base station determines, upon receiving from a terminal a request of switching to a target frequency group for reporting channel quality indication, whether switching to the target frequency group is beneficial to the communication system based on information regarding a frequency band having better quality than a frequency band being currently used for data communication, approves switching to the target frequency group if switching to the target frequency group is determined beneficial to the communication system, and instructs the terminal about switching to the target frequency group.

15. The method according to claim 14, wherein, when the base station determines to switch to a different frequency group than a frequency group reported by a terminal, the base station transmits to the terminal information regarding the different frequency group.

16. A communication system comprising:
a plurality of terminals that perform the method of reporting channel quality indication according to claim 1; and
a base station that performs scheduling based on channel quality indication received from the terminals.

17. A communication system comprising:
a plurality of terminals that perform the method of reporting channel quality indication according to claim 6; and
a base station that performs scheduling based on channel quality indication received from the terminals.

18. A communication system comprising:
a plurality of terminals that perform the method of reporting channel quality indication according to claim 7; and
a base station that performs scheduling based on channel quality indication received from the terminals.

19. A communication system comprising:
a plurality of terminals that perform the method of reporting channel quality indication according to claim 8; and
a base station that performs the method of scheduling according to claim 14.

20. A terminal that that performs the method of reporting channel quality indication according to claim 1.

21. A terminal that that performs the method of reporting channel quality indication according to claim 6.

22. A terminal that that performs the method of reporting channel quality indication according to claim 7.

23. A terminal that that performs the method of reporting channel quality indication according to claim 8.

24. A base station comprising a scheduler that performs the method of scheduling according to claim 14.
